# FASCICULE DE BREVET EUROPEEN

(11) **EP 2 399 109 B1**
(45) Date de publication et mention de la délivrance du brevet: **03.04.2013**
(21) Numéro de dépôt: 10709877.4
(22) Date de dépôt: 16.02.2010
(51) Int. Cl.: B82Y 15/00, B82Y 25/00, G01L 1/12

(54) **DISPOSITIF ET PROCEDE DE DETECTION DE CONTRAINTE MECANIQUE, PROCEDE DE FABRICATION D'UN TEL DISPOSITIF, ET CALIBRATION**
VORRICHTUNG UND VERFAHREN ZUR ERKENNUNG MECHANISCHER BEANSPRUCHUNG SOWIE VERFAHREN ZUR HERSTELLUNG UND KALIBRIERUNG EINER SOLCHEN VORRICHTUNG
DEVICE AND METHOD FOR DETECTING MECHANICAL STRESS, METHOD FOR MAKING SUCH DEVICE AND CALIBRATION

(30) Priorité: 18.02.2009 FR 0951042
(43) Date de publication de la demande: 28.12.2011
(73) Titulaire: Ecole Polytechnique, 91128 Palaiseau Cedex (FR); Commissariat à l'Énergie Atomique et aux Énergies Alternatives, 75015 Paris (FR); Centre National de la Recherche Scientifique - CNRS -, 75794 Paris Cedex 16 (FR)
(72) Inventeur: WEGROWE, Jean-Eric, F-91370 VERRIERE-LE-BUISSON (FR); CLOCHARD, Marie-Claude, F-78500 Sartrouville (FR); WADE, Travis Lee, F-75015 Paris (FR); LAIREZ, Didier, F-92140 Clamart (FR)
(74) Mandataire: Cabinet Plasseraud
(86) Numéro de dépôt international: PCT/FR2010/050260
(87) Numéro de publication internationale: WO 2010/094883

(56) Documents cités:
- NAVAS D ET AL: "Effects of the magnetoelastic anisotropy in Ni nanowire arrays" JOURNAL OF APPLIED PHYSICS, AMERICAN INSTITUTE OF PHYSICS. NEW YORK, US, vol. 103, no. 7, 19 février 2008 (2008-02-19), pages 7D523-7D523, XP012110132 ISSN: 0021-8979
- WEGROWE J-E ET AL: "ANISOTROPIC MAGNETORESISTANCE AS A PROBE OF MAGNETIZATION REVERSAL IN INDIVIDUAL NANO-SIZED NICKEL WIRES" IEEE TRANSACTIONS ON MAGNETICS, IEEE SERVICE CENTER, NEW YORK, NY, US, vol. 34, no. 4, PART 01, 1 juillet 1998 (1998-07-01), pages 903-905, XP000833015 ISSN: 0018-9464
- PARK ET AL: "Self-sensing and interfacial evaluation of Ni nanowire/polymer composites using electro-micromechanical technique" COMPOSITES SCIENCE AND TECHNOLOGY, ELSEVIER, UK, vol. 67, no. 10, 9 mai 2007 (2007-05-09), pages 2121-2134, XP022066523 ISSN: 0266-3538
- MCGARY PATRICK ET AL: "Magnetic nanowires for acoustic sensors (invited)" JOURNAL OF APPLIED PHYSICS, AMERICAN INSTITUTE OF PHYSICS. NEW YORK, US, vol. 99, no. 8, 24 avril 2006 (2006-04-24) , pages 8B310-08B310, XP012084242 ISSN: 0021-8979

## Description

La présente invention est relative aux dispositifs et procédés de détection de contraintes mécaniques, aux procédés de fabrication de tels dispositifs, ainsi qu'aux dispositifs et procédés de calibration de tels dispositifs, et aux procédés de fabrication de tels dispositifs de calibration.

De Navas et al « Effects of the magneto elastic anisotropy in Ni nanowire arrays », Journal of Applied Physics vol. 103, N° 7, 19/02/08, on connait un dispositif de détection de contraintes mécaniques comprenant :
- un capteur comprenant :
   * une matrice présentant une première et une deuxième surface opposées,
   * une pluralité de faisceaux de fils magnétostrictifs, chaque fil étant de dimension transversale inférieure à 1 micromètre, et s'étendant chacun à travers la matrice, au moins au niveau de et transversalement à la première surface,
   * un ensemble de mesure, et
- une unité informatique de traitement. Un capteur de contraintes mécanique employant des nanofils de Nickel est divulgué dans Parte et al., Composites and Technology 67 (2007), 2121-2134. De nos jours, les physiciens ont encore du mal à comprendre à l'échelle micrométrique ou submicrométrique toutes les variations de pression exercée par un fluide sur une surface. De cette compréhension dépend l'optimisation de la géométrie des surfaces solides en contact avec le fluide (air, eau, gaz ...). Par conséquent, l'échelle de mesure a besoin d'être affinée.

La présente invention a notamment pour but de fournir une solution à ce problème.

A cet effet, on prévoit que l'ensemble de mesure soit adapté pour détecter un état magnétique de chaque faisceau, et que l'unité informatique de traitement comprend
* une zone mémoire comprenant une relation entre l'état magnétique d'un faisceau et une contrainte mécanique appliquée à ce faisceau, ladite relation ayant été obtenue au cours d'une étape préalable de calibration de fil magnétostrictif,
* un calculateur adapté pour calculer une contrainte mécanique appliquée à chaque faisceau, à partir de l'état magnétique détecté pour ce faisceau, et de ladite relation.

Grâce à ces dispositions, on peut obtenir une cartographie précise d'un champ de contraintes mécaniques appliqué à un objet comprenant un tel capteur.

Dans des modes de réalisation préférés de l'invention, on peut éventuellement avoir recours en outre à l'une et/ou à l'autre des dispositions suivantes :
- les fils sont magnéto-résistifs, et l'ensemble de mesure est adapté pour détecter un état magnétique de chaque faisceau en mesurant une résistivité électrique du faisceau ;
- les fils s'étendent de la première à la deuxième surface, et sont électriquement reliés à un générateur de courant électrique et à un voltmètre ;
- chaque faisceau comprend un unique fil ;
- chaque faisceau comprend une pluralité de fils connectés électriquement en parallèle ;
- le dispositif comprend :
- un ensemble d'excitation de calibration adapté pour appliquer une contrainte mécanique déterminée variable à la matrice, et ainsi aux fils,
- un ensemble d'enregistrement, adapté pour enregistrer dans la zone mémoire ladite contrainte mécanique et l'état magnétique détecté associé ;
- la matrice est piézo-électrique, et l'ensemble de calibration est adapté pour appliquer à la matrice un champ électrique déterminé variable.

Selon un autre aspect, l'invention se rapporte à ensemble comprenant un objet et un tel dispositif de détection intégré dans l'objet.

Selon un autre aspect, l'invention se rapporte à un tel ensemble, ou à un ensemble comprenant un tel dispositif de détection, l'ensemble comprenant en outre un dispositif de calibration comprenant :
- un capteur de calibration comprenant :
   * une matrice de calibration présentant une première et une deuxième surface opposées,
   * au moins un fil magnétostrictif de calibration, chaque fil de calibration étant de dimension transversale inférieure à 1 micromètre, et s'étendant chacun à travers la matrice de calibration, au moins au niveau de et transversalement à la première surface,
   * un ensemble d'excitation de calibration adapté pour appliquer une contrainte mécanique déterminée variable à la matrice de calibration, et ainsi aux fils de calibration pour ladite contrainte mécanique déterminée,
   * un ensemble de mesure de calibration, adapté pour détecter un état magnétique dudit fil de calibration,
- une unité informatique de traitement comprenant :
   * une zone mémoire,
   * un ensemble d'enregistrement, adapté pour enregistrer dans la zone mémoire une pluralité de contraintes mécaniques déterminées et l'état magnétique détecté associé,
   * un calculateur adapté pour déterminer ladite relation à partir desdites contraintes mécaniques déterminées appliquées et des états magnétiques détectés.

Selon un autre aspect, l'invention se rapporte à un procédé de fabrication d'un dispositif de détection de contraintes mécaniques, dans lequel :
(a) on forme un capteur en mettant en oeuvre les étapes suivantes:
   (a1) on fournit une matrice mésoporeuse présentant une première et une deuxième surface opposées,
   (a2) on forme une pluralité de faisceaux de fils magnétostrictifs, chaque fil étant de dimension transversale inférieure à 1 micromètre, et s'étendant chacun à travers la matrice, au moins au niveau de et transversalement à la première surface,
   (a3) on fournit un ensemble de mesure, adapté pour détecter un état magnétique de chaque faisceau,
(b) on relie le capteur à une unité informatique de traitement comprenant :
   * une zone mémoire comprenant une relation entre l'état magnétique d'un faisceau et une contrainte mécanique appliquée à ce faisceau, ladite relation ayant été obtenue au cours d'une étape préalable de calibration de fil magnétostrictif,
   * un calculateur adapté pour calculer une contrainte mécanique appliquée à chaque faisceau, à partir de l'état magnétique détecté pour ce faisceau, et de ladite relation.

Selon un autre aspect, l'invention se rapporte à un procédé de détection de contraintes mécaniques appliquées à la surface d'un objet équipée d'un capteur comprenant :
* une matrice présentant une première et une deuxième surface opposées, lesdites contraintes à mesurer étant appliquées à la première surface,
* une pluralité de faisceaux de fils magnétostrictifs, chaque fil étant de dimension transversale inférieure à 1 micromètre, et s'étendant chacun à travers la matrice, au moins au niveau de et transversalement à la première surface,
* un ensemble de mesure, adapté pour détecter un état magnétique de chaque faisceau,

ledit capteur étant reliable à une unité informatique de traitement comprenant :
* une zone mémoire comprenant une relation entre l'état magnétique d'un faisceau et une contrainte mécanique appliquée à ce faisceau, ladite relation ayant été obtenue au cours d'une étape préalable de calibration de fil magnétostrictif,
* un calculateur adapté pour calculer une contrainte mécanique appliquée à chaque faisceau, à partir de l'état magnétique détecté pour ce faisceau, et de ladite relation,
   dans lequel :
   (a) on génère ladite contrainte mécanique,
   (b) on mesure un état magnétique d'au moins un faisceau,
   (c) on calcule la contrainte mécanique appliquée audit faisceau à partir de l'état magnétique détecté pour ce faisceau, et de ladite relation.

Selon un autre aspect, l'invention se rapporte à un procédé de détection de contraintes mécaniques appliquées à la surface d'un objet équipée d'un capteur comprenant :
* une matrice présentant une première et une deuxième surface opposées, lesdites contraintes à mesurer étant appliquées à la première surface,
* une pluralité de faisceaux de fils magnétostrictifs, chaque fil étant de dimension transversale inférieure à 1 micromètre, et s'étendant chacun à travers la matrice, au moins au niveau de et transversalement à la première surface,
* un ensemble de mesure, adapté pour détecter un état magnétique de chaque faisceau,
   ledit capteur étant reliable à une unité informatique de traitement comprenant :
   * une zone mémoire comprenant une relation entre l'état magnétique d'un faisceau et une contrainte mécanique appliquée à ce faisceau, ladite relation ayant été obtenue au cours d'une étape préalable de calibration de fil magnétostrictif,
   * un calculateur adapté pour calculer une contrainte mécanique appliquée à chaque faisceau, à partir de l'état magnétique détecté pour ce faisceau, et de ladite relation,
      dans lequel :
      (a) on génère ladite contrainte mécanique,
      (b) on mesure un état magnétique d'au moins un faisceau,
      (c) on calcule la contrainte mécanique appliquée audit faisceau à partir de l'état magnétique détecté pour ce faisceau, et de ladite relation.

Selon un autre aspect, l'invention se rapporte à un procédé de calibration d'un dispositif de détection de contraintes mécaniques, dans lequel :
- on fournit un capteur de calibration comprenant :
   * une matrice de calibration présentant une première et une deuxième surface opposées,
   * au moins un fil magnétostrictif de calibration, chaque fil de calibration étant de dimension transversale inférieure à 1 micromètre, et s'étendant chacun à travers la matrice de calibration, au moins au niveau de et transversalement à la première surface,
   * un ensemble d'excitation de calibration adapté pour appliquer une contrainte mécanique déterminée variable à la matrice de calibration, et ainsi aux fils de calibration pour ladite contrainte mécanique déterminée,
   * un ensemble de mesure de calibration, adapté pour détecter un état magnétique dudit fil de calibration,
- on fournit une unité informatique de traitement comprenant :
   * une zone mémoire,
   * un ensemble d'enregistrement, adapté pour enregistrer dans la zone mémoire une pluralité de contraintes mécaniques déterminées et l'état magnétique détecté associé,
   * un calculateur adapté pour déterminer une relation entre l'état magnétique d'un fil et une contrainte mécanique appliquée à ce fil à partir desdites contraintes mécaniques déterminées appliquées et des états magnétiques détectés,
- on détecte l'état magnétique dudit fil de calibration pour chacun d'une pluralité de contraintes mécaniques appliquées,
- on détermine ladite relation à partir desdites contraintes mécaniques appliquées et des états magnétiques détectés.

Selon un autre aspect, l'invention se rapporte à un procédé de fabrication d'un dispositif de calibration d'un dispositif de détection de contraintes mécaniques,
dans lequel ;
a) on fabrique un capteur de calibration en mettant en oeuvre les étapes suivantes:
   * on fabrique une matrice de calibration présentant une première et une deuxième surface opposées,
   * on synthétise au moins un fil magnétostrictif de calibration, chaque fil de calibration étant de dimension transversale inférieure à 1 micromètre, et s'étendant chacun à travers la matrice de calibration, au moins au niveau de et transversalement à la première surface,
   * on connecte à la matrice un ensemble d'excitation de calibration adapté pour appliquer une contrainte mécanique déterminée variable à la matrice de calibration, et ainsi aux fils de calibration,
   * on connecte un ensemble de mesure de calibration, adapté pour détecter un état magnétique dudit fil de calibration pour ladite contrainte mécanique déterminée,
b) on relie le capteur de calibration à une unité informatique de traitement comprenant :
   * une zone mémoire,
   * un ensemble d'enregistrement, adapté pour enregistrer dans la zone mémoire une pluralité de contraintes mécaniques déterminées et l'état magnétique détecté associé,
   * un calculateur adapté pour déterminer une relation entre l'état magnétique d'un fil et une contrainte mécanique appliquée à ce fil à partir desdites contraintes mécaniques déterminées appliquées et des états magnétiques détectés.

D'autres caractéristiques et avantages de l'invention apparaîtront au cours de la description suivante de deux de ses formes de réalisation, donnée à titre d'exemple non limitatif, en regard des dessins joints.

Sur les dessins :
- la figure 1 est une vue schématique d'un premier mode de réalisation de l'invention,
- la figure 2 est une vue partielle en perspective d'un capteur utilisé dans le premier mode de réalisation,
- les figures 3a et 3b sont des images FESEM, à différentes échelles, de la surface d'une membrane utilisée pour le capteur de la figure 2,
- la figure 4 est une vue d'une membrane telle que représentée aux figures 3a et 3b après révélation chimique,
- la figure 5 est une vue correspondant à la figure 4 pour une membrane selon un autre matériau constitutif,
   - la figure 6 est un graphique illustrant la partie réelle et la partie imaginaire de la permitivité diélectrique pour deux membranes, en fonction de la fréquence,
   - la figure 7 est une image de microscope montrant des fils déposés dans une membrane,
   - la figure 8 est une image FESEM d'un fil déposé dans un autre type de membrane,
   - les figures 9a et 9b sont des graphiques montrant des profils de magnétorésistance d'anisotropie de nanofils de nickel de 70 nm de diamètre (Fig. 9a) ou 40 nm de diamètre (Fig. 9b) pour différentes températures,
   - la figure 10 est une vue schématique en perspective montrant l'application d'une contrainte à une membrane,
   - les figures 11a et 11b sont des graphiques montrant les déformations électrostrictives d'une membrane soumise à de telles contraintes,
   - la figure 12 est un graphique présentant un cycle d'hystérésis de polarisation en fonction du champ électrique pour un matériau constitutif de membrane,
   - la figure 13 est une vue similaire à la figure 2 pour un capteur de calibration, et
   - la figure 14 montre une vue partielle de dessus du capteur.

Sur les différentes figures, les mêmes références désignent des éléments identiques ou similaires.

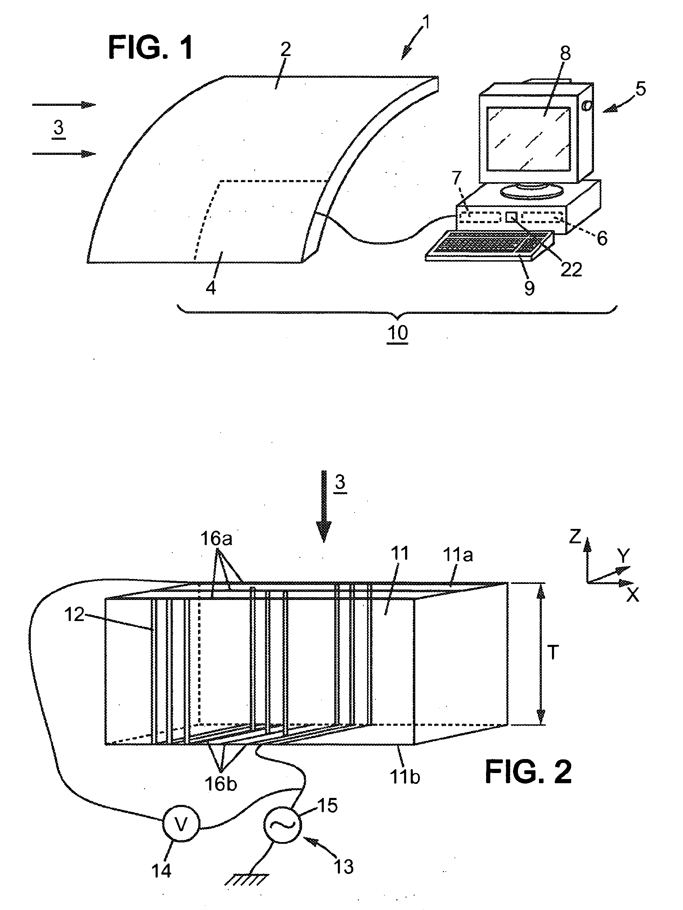

La figure 1 présente un objet 1 ou une partie d'objet présentant une surface 2 sur laquelle on veut mesurer/cartographier un champ de contrainte mécanique appliqué par un facteur extérieur 3, tel que, par exemple, un écoulement fluide (air, eau, gaz,...) ou autre.

Sur la partie de la surface 2 sur laquelle la mesure de contrainte mécanique est à effectuer, un capteur 4 est disposé, qui sera décrit plus en détail ci-après. Le capteur 4 est relié à une unité informatique de traitement 5 comprenant entre autres un calculateur 6, une zone mémoire 7, et une unité d'enregistrement 22 dont la structure n'a pas besoin d'être détaillée plus avant. De manière classique, l'unité informatique de traitement 5 peut également comprendre un écran 8 et un dispositif d'entrée 9 tel qu'un clavier, souris, ou autre .... Le capteur 4 et l'unité informatique de traitement 5 forment ensemble un dispositif de détection 10.

Comme cela est représenté sur la figure 2, le capteur est composé d'une matrice 11 (ou membrane) et d'une assemblée de nanoéléments 12 s'étendant transversalement à l'épaisseur de la matrice, de façon interne à la matrice. La matrice est typiquement une membrane d'épaisseur T de l'ordre d'une dizaine de microns (1-100 µm) et dont les autres dimensions sont déterminées par la taille désirée du capteur (millimètre, centimètre, ou plus). Ainsi, seule une partie de l'étendue en X-Y du capteur est visible sur la figure 2. Les nanoéléments 12 sont typiquement des nanofils qui s'étendent entre les deux faces opposées 11a, 11b de la matrice, et jusqu'à celles-ci.

Selon un premier mode de réalisation, la matrice 11 est du type apte à se déformer quand elle est soumise à une excitation contrôlée, transmettant ainsi sa déformation aux fils 12 situés à l'intérieur de la matrice. A titre d'exemple, la matrice 11 est réalisée dans un matériau piézoélectrique, dont des exemples seront donnés ci-après.

Par piézoélectrique, on entend que la matrice 11 est capable de se déformer lorsqu'on lui applique un champ électrique (inversement, et de manière indissociable, la matrice 11 se polarise électriquement sous l'action d'une contrainte mécanique).

Chaque fil 12 est un fil magnétostrictif, à savoir réalisé dans un matériau dans lequel les états magnétiques, par exemple la susceptibilité magnétique, se modifie en présence de contraintes mécaniques dans le matériau. A titre d'exemple, le fil 12 est constitué de nickel, cobalt, ou autre. Les fils 12 présentent une longueur correspondant par exemple à l'épaisseur de la matrice 11 entre ses deux faces parallèles 11a, 11b, c'est-à-dire, par exemple de l'ordre d'environ 1 µm à 100 µm, par exemple 10 à 20 µm. L'ordre de grandeur de la dimension du fil transversal à sa longueur est d'environ 5 nanomètres à 1 micron, préférentiellement d'environ 15 à 500 nm. Les fils 12 sont disposés dans la matrice avec une densité surfacique de l'ordre de 10⁹ fils/cm² (entre 10⁸ et 10¹⁰ fils/cm²).

En outre, on peut prévoir que les fils 12 soient réalisés magnétorésistifs, à savoir que leur résistance électrique est variable en fonction de leur état d'aimantation.

Les nanoéléments 12 sont contactés individuellement ou collectivement (en parallèle), de part et d'autre de la matrice, à un dispositif de mesure 13 de leur état magnétique. Un tel dispositif de mesure 13 comporte par exemple un voltmètre 14 et un générateur de courant 15. Bien qu'un seul voltmètre et un seul générateur de courant soient représentés connectés à un fil 12 donné sur la figure 2, on notera qu'ils peuvent être connectés alternativement à d'autres fils et/ou qu'on dispose d'un générateur de courant et/ou d'un voltmètre par fil. Le procédé de mesure de la magnétorésistance du fil est un procédé classiquement utilisé pour une tête de lecture magnétique nanométrique, et ne nécessite pas d'être décrit plus en détail ci-après. Ainsi, on notera que le descriptif de mesure 13 peut comprendre un générateur de champ magnétique externe. Par exemple, une couche magnétique (non représentée) est électro-déposée à côté du fil.

La connexion électrique des fils 12 se fait par l'intermédiaire de pistes électriques 16a parallèles s'étendant sur la surface 11a de la matrice le long d'une direction X et de pistes 16b électriquement conductrices s'étendant de manière parallèle le long de la direction Y, transversale à la direction X, sur la surface 11b de la matrice, de manière à réaliser un adressage des fils 12. Ainsi, chaque paire d'une piste 16a et d'une piste 16b repère un fil correspondant 12.

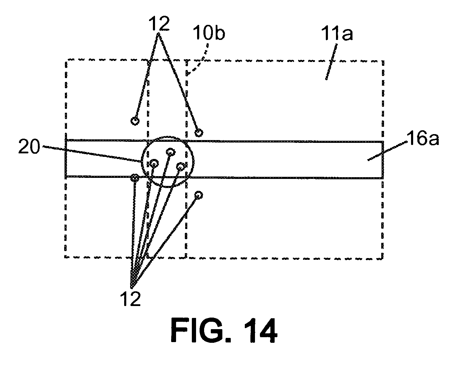

Bien que, sur la figure 2, chaque fil 12 soit représenté individuellement connecté à une piste 16a et une piste 16b, on peut par exemple prévoir que, sur la figure 2, un fil 12 soit remplacé par un faisceau 20 de fils parallèles s'étendant entre les faces 11a et 11b, et électriquement connectés à une même piste 16a et à une même piste 16b, selon les tailles respectives des fils 12 et des pistes 16a et 16b. La figure 14 montre de dessus une partie du capteur où un faisceau 20 de trois fils est relié aux pistes 16a et 16b. On peut prévoir que les pistes 16a et 16b soient disposées selon un motif et espacement réguliers et que le capteur puisse comprendre des fils 12 qui sont connectés électriquement à une seule piste, voire à aucune (ceux-ci ne pouvant par conséquent, délivrer aucune information).

Le dispositif qui vient d'être décrit fonctionne comme suit : revenant à la figure 1, lorsqu'un champ de contraintes mécaniques est appliqué par un facteur extérieur 3 à la surface 11a de la matrice, la matrice 11 et, par conséquent, les fils 12 sont soumis à une déformation mécanique dépendant de la contrainte mécanique localement appliquée. Du fait du caractère magnétostrictif des fils 12, l'état magnétique (en particulier la susceptibilité magnétique) de chaque fil 12 varie en fonction de la contrainte mécanique appliquée à ce fil. L'ensemble de mesure 13 est utilisé pour mesurer ce changement d'état magnétique. Dans le présent exemple, cet état magnétique est détecté pour chaque fil en détectant du fait de la propriété magnétorésistive de chaque fil le changement de résistance électrique de ce fil dû à son changement de susceptibilité magnétique. A cet effet, un courant électrique est généré dans le fil par le générateur de courant 15, et le voltmètre 14 mesure les variations de tension aux bornes du fil au cours de l'expérience. Cette mesure se fait par exemple en présente d'un champ magnétique externe.

Cette mesure est enregistrée par l'unité d'enregistrement 22 pour chaque fil 12 dans la zone mémoire 7 de l'unité informatique de traitement. De plus, cette zone mémoire 7 comprend une relation, préalablement établie, entre l'état magnétique d'un fil et la contrainte mécanique appliquée à ce fil. Cette relation est établie au cours d'une étape de calibration qui sera explicitée ci-après. Le calculateur 6, sur la base de cette relation et des valeurs mesurées détermine la valeur de contrainte mécanique appliquée à chaque fil. Chaque fil étant de plus repéré par son adressage unique par l'intermédiaire des pistes 16a et 16b, une cartographie du champ de contraintes mécaniques peut être établie. Cette cartographie peut être mémorisée, et/ou représentée à l'écran 8.

Dans ce qui précède, la description a été faite en référence à des faisceaux de fil comprenant un fil unique. Toutefois, un fonctionnement analogue serait possible dans le cas de faisceaux comportant plusieurs fils disposés en parallèle.

Ci-après, on détaille le procédé de fabrication du dispositif présenté ci-dessus en rapport aux figures 1 et 2.
La configuration en réseau de faisceaux de fils séparée par la membrane 11 peut être réalisée de plusieurs façons distinctes. Selon une première méthode, on bombarde le film polymère avec des ions lourds accélérés suivant un balayage de la zone à traiter à travers un masque délimitant les zones à contacter. Selon une autre méthode alternative, on focalise un micro-faisceau d'ions lourds accélérés sur des zones micrométriques localisées espacées régulièrement de 10 à 100 µm pour former un réseau ordonné d'impacts délimitant les zones à contacter [B.E. Fischer, M. Heiß, M. Cholewa, « About the art to shoot with single ions » NIM B 210 (2003) 285-291 ; B.E. Fischer, M. Heiß, « A facility to mass-produce ordered single hit patterns in continuous 35 mm films » NIM B 206 (2007) 442-444].

La révélation chimique des traces laissées par les ions dans le film polymère va conduire à une membrane polymère dont les pores seront organisés selon le schéma du masque (suivant la première méthode d'irradiation) ou du réseau (suivant la méthode d'irradiation 2).

On utilise par exemple un polymère possédant des propriétés ferro-électriques, parmi eux, le PVDFβ, et le terpolymère P(VDF-TrFE-CFE) disponible chez la société Piezotech SA.

### Le PVDFβ

Le poly(difluorure de vinylidène) PVDF est un polymère à chaîne linéaire de formule brute - (CH₂-CF₂)ₙ⁻. Ce polymère semi-crystallin existe sous plusieurs phases. Le PVDFβ est obtenu après biétirage à froid du PVDFα de phase amorphe. L'orientation des crystallites s'effectue perpendiculairement à la force d'étirement. Cette nouvelle organisation des crystallites et le changement de phase génère des propriétés piezo-électriques au matériau.

### Le P(VDF-TrFE-CFE)

Ce terpolymère P(VDF-TrFE-CFE) est synthétisé et commercialisé par la société PiezoTech SA. Il est constitué de trois monomères : le difluorure de vynilidène, le trifluorure d'éthylène et le chlorofluoroéthylène en proportions (61/29/10). Ce polymère montre des propriétés d'électrostriction remarquable [Huang C. et al, IEEE Trans. on Dielec. and Elec. Insul. 20 (2004) 299-311], notamment dans le sens de l'épaisseur.

### Irradiation ionique

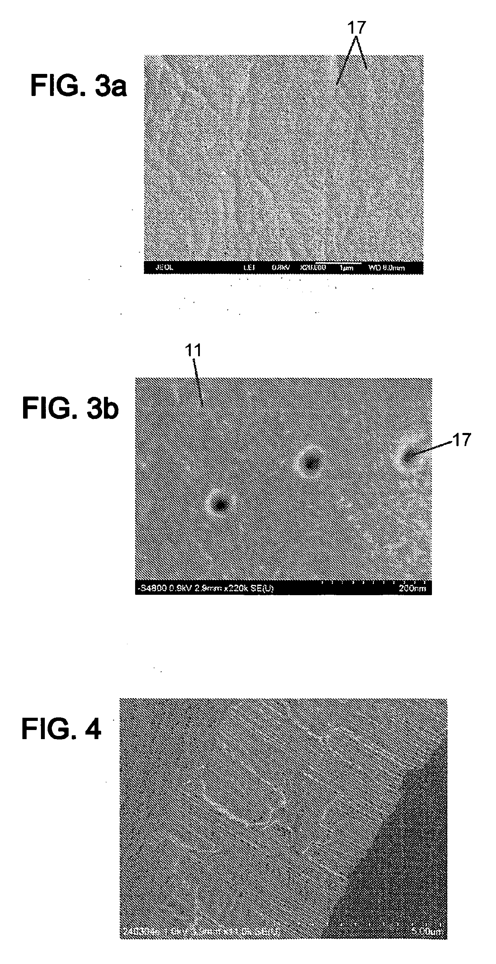

De l'attaque chimique des traces laissées par les ions projectiles générés par un accélérateur d'ions lourds dans la matrice polymère résulte l'apparition de pores cylindriques, biconiques ou coniques suivant les conditions d'attaque, l'énergie des ions incidents, la géométrie des cellules d'attaque, la nature chimique du polymère... [R. Spohr « Ion Tracks and Microtechnology - Principles and Applications » Friedr. Vieweg & Sohn Verlagsgesellschaft mbH, Braunschweigh 1990 ISBN: 3-528-06330-0]. Pour simplifier, dans le présent exemple, nous n'aborderons que des pores 17 cylindriques, parallèles les uns aux autres et perpendiculaires à la surface des membranes. La distribution des rayons de ces nanopores est étroite et varie de 5 nm à quelques microns pour la forme cylindrique. Les figures 3a et 3b montrent un exemple de pores 17 de 10 nm de diamètre dans une membrane 11 de 9 µm d'épaisseur.

La figure 4 montre une membrane en PVDFβ obtenue après irradiation de 10⁹ ions Kr par cm² (10 MeV/uma) et révélation chimique d'une solution de KOH 10 N et KMnO₄ 0.25 N à 65°C pendant 30 min.

Le PVDFβ permet une bonne reproductibilité pour des membranes de 9µm d'épaisseur et un diamètre de pore de 50 nm suivant les conditions d'attaque précédentes.

De même, le terpolymère a été étudié récemment et il se prête également à l'attaque de traces.

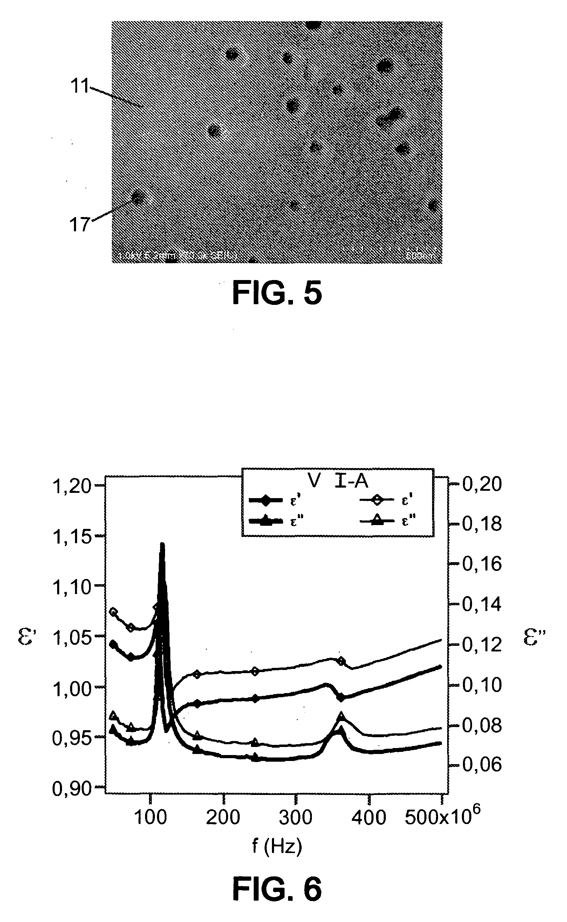

La figure 5 montre une membrane en P(VDF-TrFE-CFE) obtenue après irradiation de 5.10⁸ ions Kr par cm² (10 MeV/uma) et révélation chimique d'une solution de KOH 10 N et KMnO₄ 0.25 N à 80°C pendant 50 min.

Le rayon du pore est directement proportionnel au temps d'attaque, il est donc possible d'obtenir des rayons allant de 15 nm à un voire quelques microns sur une dizaine de µm d'épaisseur. Pour la membrane polymère, le très fort rapport d'aspect peut causer un problème de capillarité lors de l'électrodéposition, du fait de l'hydrophobie de ces membranes, rendant difficile l'utilisation de pores de dimension inférieure à 15 nanomètres. Toutefois, l'intérieur des pores pourrait être rendu non-hydrophile, par exemple par traitement chimique, pour résoudre ce problème.

### Déformation des membranes nanoporeuses piezoélectriques et électrostrictives sous champ électrique

Comme cela est expliqué ci-après, les membranes 11, même après avoir été soumises au procédé d'attaque de traces, conservent leur caractère piezo-électrique.

De l'application d'un champ électrique, E, dans la direction perpendiculaire au film (direction Z sur la figure 2) résulte un changement Δz de l'épaisseur du film z. Δz/z=d₃₃E, où d₃₃ est la constante de la piezo-élongation dans la direction correspondante. Pour un film polarisé de β-PVDF, d₃₃ est égale à 30 pm/V. Dans une première approximation, la déformation a lieu à volume constant si le PVDF est supposé incompressible. Pour des membranes obtenues par irradiation d'ions lourds à une fluence de 10⁷cm⁻² suivie d'une attaque chimique donnant un rayon de pore de 20 nm, la fraction de volume occupée par les pores est Φ≈10⁻⁴. Pour une déformation conséquente des pores, le champ électrique est de l'ordre de 10⁶V/m. Pour une membrane de 10µm d'épaisseur, le potentiel correspondant est de 10V. Cette valeur est tout à fait raisonnable pour envisager une application piezoélectrique avec de telles membranes.

### Mesures diélectriques sur les membranes PVDFβ

Les mesures ont été effectuées sur des films de PVDF biétirés et polarisés d'épaisseur, h = 9µm (vitesse du son, cL = 2250 m/s) (films dits « vierges ») et les mêmes films irradiés à une fluence de 5 x 10⁸ ions. cm⁻² (ions Kr de 10 MeV/uma) et attaqués 30 min dans une solution de KOH 10 N et KMnO₄ 0.25 N.

La figure 6 montre des spectres diélectriques pour des films vierge (V) et attaqué (I-A) : partie réelle (ε') et imaginaire (ε'') de la permitivité diélectrique en fonction de la fréquence f. Ces spectres sont quasiment identiques pour les deux films (il y a un léger décalage vers les hautes fréquences pour le film irradié-attaqué).

Ces spectres montrent une résonance respectivement à 118 et 120 MHz et un premier harmonique impair à 355 et 360 MHz. La fréquence est à comparer à celle que l'on peut prévoir à partir de : 1=2h = cL/f(1) qui donne f= 125 MHz. Ce bon accord démontre la piézoélectricité des deux films. L'attaque chimique n'annihile donc pas les propriétés initiales du film.

### Electrodéposition de nanofils métalliques dans les membranes nanoporeuses

L'électrodéposition de nanofils 12 se fait dans les pores 17.

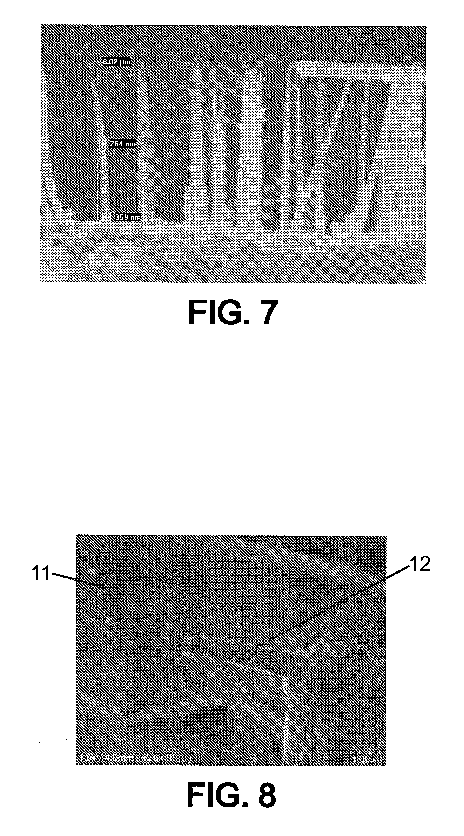

Cette technique est également possible dans des membranes hydrophobes telles que le PVDF et le P(VDF-TrFE-CFE) en ajoutant des molécules tensioactives lors de l'électrodéposition. La figure 8 est une image FESEM d'un nanofil de Nickel électrodéposé dans une membrane en P(VDF-TrFE-CFE) ayant subi une attaque de traces. En variante, la croissance des nano éléments actifs peut se faire par CVD.

### Contactage du nanofil unique et mesure de la magnétostriction en fonction du champ électrique

L'étape suivante consiste en une technique de contactage d'un fil unique au sein du bain électrolytique. Cette méthode permet de concurrencer avantageusement les techniques plus lourdes de nanofabrication par lithogravure et gravure ionique (qui sont toutefois envisageables dans le cadre de l'invention). L'existence des propriétés de magnétorésistance permet une mesure directement des états de l'aimantation sur des nanostructures magnétiques individuels par le biais d'un voltmètre (Wegrowe et al. PRL 82 (1999), 3681].

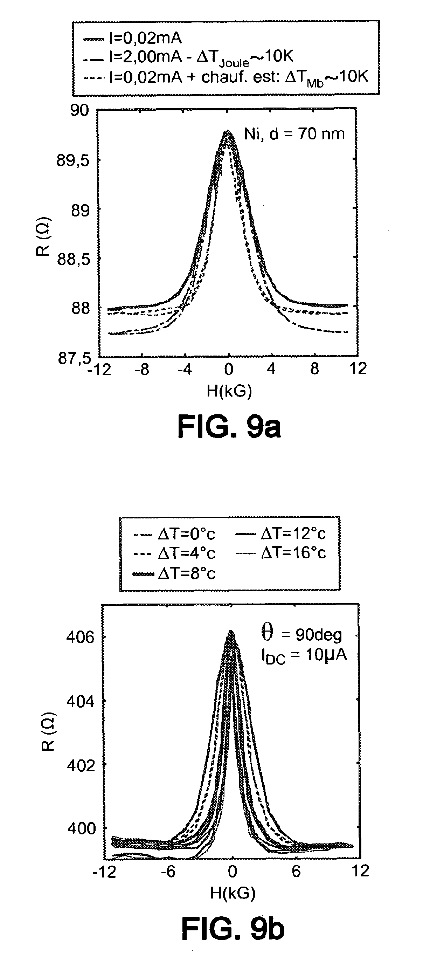

Dans le cadre de cette recherche nous avons constaté un effet très important (et très surprenant) de la magnétostriction induite par la membrane sur le nanofil, mesuré via la magnétorésistance d'anisotropie (AMR). La courbe Fig. 9a montre un profil typique d'AMR mesuré sur un fil de Ni unique dans une membrane nanoporeuse de polycarbonate, avec un diamètre de pores de 70 nm : la courbe en traits pleins est le signal AMR d'une hystérésis (mesuré avec un champ perpendiculaire à l'axe du fil) d'un monodomaine magnétique . La courbe en pointillés est le même signal mesuré en chauffant la membrane de 10°C. La courbe en traits mixtes est le signal mesuré en injectant un courant de très forte densité de façon à chauffer par effet Joule le fil seulement. On observe que la courbe en pointillés correspond à une aimantation dont l'anisotropie (ou la coercivité) est réduite de plus de 30%. Or la courbe en traits mixtes montre que cet effet (qui n'existe pas sur le Ni massif, et n'a pas été observé par ailleurs) n'est pas produit par l'échauffement du Ni(la variation d'amplitude de l'AMR visible à saturation est un autre effet lié au transport dépendant du spin, objet de l'étude qui a motivé ces mesures). On en conclut (en accord avec quelques études précédentes : Rheem et al., Nanotechnology, 18(2007), 015202) qu'il est produit par la dilatation de la membrane. Celle-ci produit en retour une pression sur le fil, qui est mesurable (y compris à champ fixe, mais non nul) via un effet magnétostrictif (a priori beaucoup plus important ici que dans du Ni massif). La figure 9b montre que l'anisotropie d'aimentation se réduit avec l'augmentation de la température pour un diamètre de pore de 40 nm (la variation de la saturation est due à une dérive de la température).

Notons que dans le cadre de la présente application capteurs il est possible que le fonctionnement du dispositif nécessite l'application d'un champ magnétique sur la partie magnétique. Conformément à l'état de l'art dans le domaine des capteurs magnétiques, il est cependant facile de produire soit un champ local, soit un couplage magnétique ad hoc, de façon à optimiser le fonctionnement. Le polymère piézoélectrique ou électrostrictif permet de quantifier directement les contraintes exercées, et de tester la direction (radiale ou longitudinale) de l'effet, comme explicité ci-après.

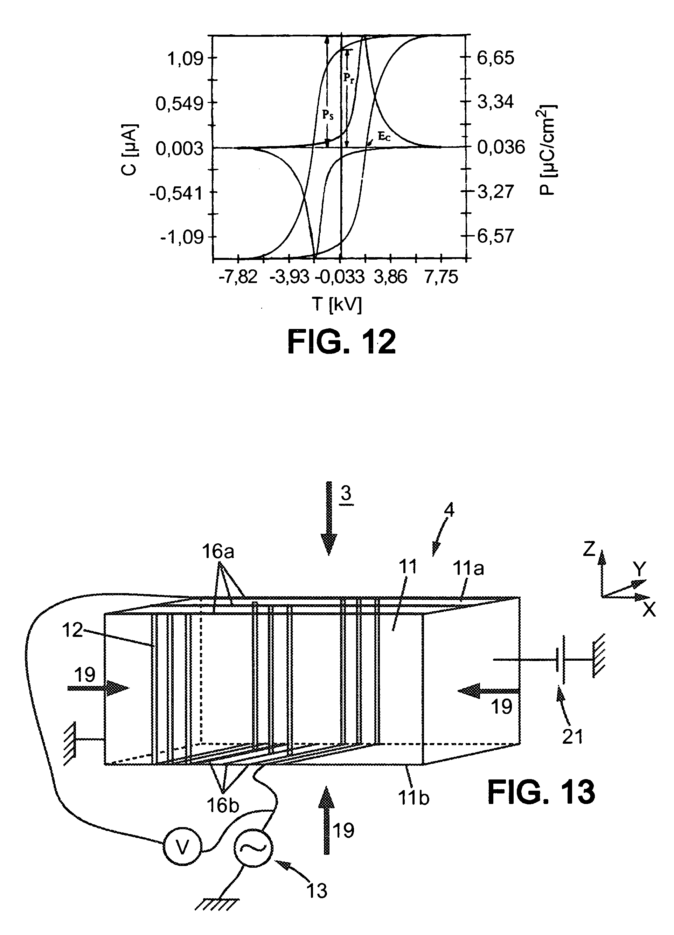

Une fois le capteur fabriqué tel qu'explicité ci-dessus, il est soumis à une étape de calibrage. Comme cela est représenté sur la figure 13, le capteur est relié à un ensemble d'excitation de calibration 21 adapté pour exercer une contrainte mécanique déterminée à la matrice 11, et ainsi aux fils 12. Dans le cas d'une matrice 11 piézoélectrique, comme dans le présent premier mode de réalisation, cet ensemble d'excitation de calibration est par exemple un système électrique adapté pour appliquer à la matrice un champ électrique déterminé variable (représenté selon la direction X sur la figure 13). Pour une valeur donnée de champ électrique appliqué (flèche 19) on détecte l'état magnétique associé de chaque nanofil 12 (comme explicité ci-dessus en relation avec la figure 2 avec un dispositif de mesure analogue 13), et l'unité d'enregistrement 22 enregistre dans la zone mémoire 7 de l'unité informatique 5 la grandeur de champ électrique appliquée et l'état magnétique détecté. Connaissant les propriétés piézoélectriques du matériau de la matrice 11, le champ électrique est directement lié à un champ de contraintes mécaniques appliqué au fil 12 au cours de cette expérience.

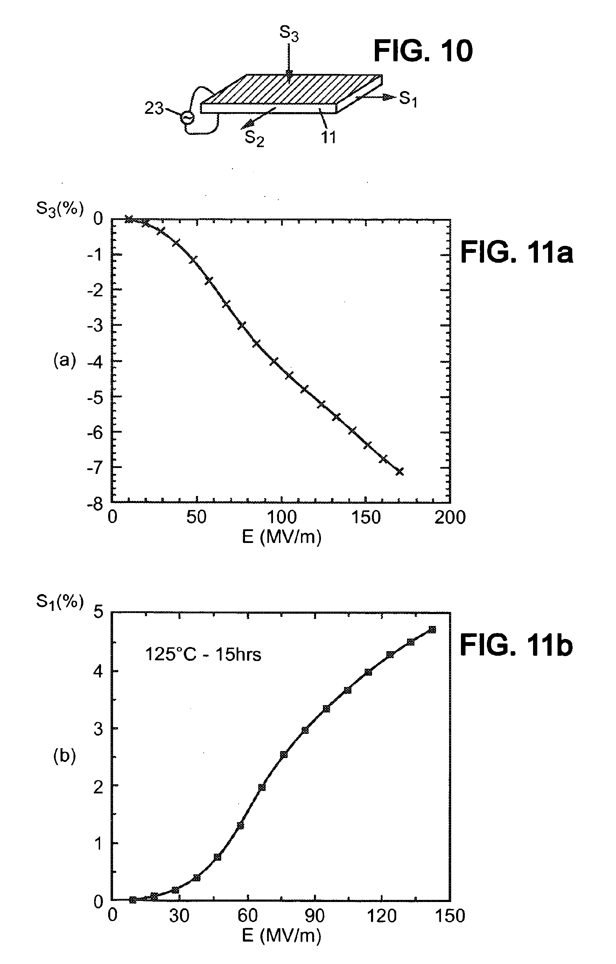

La figure 10 représente justement un exemple d'une matrice piezoélectrique à laquelle on applique un champ électrique à l'aide d'un générateur 23. La figure 11a montre l'évolution de la déformation longitudinale (S₃) et la figure 11b de la déformation transverse (S₁) en fonction du champ électrique appliqué, pour le p(VDF-TrFE-CFE). On notera les ordres de grandeur de déformation longitudinale de 7% et transversale de 5% pouvant être atteints pour ce matériau (étiré/recuit).

En ce qui concerne le PVDFβ, la figure 12 montre l'évolution de l'induction électrique en fonction de la tension appliquée. La transition est réversible et des cycles d'hystérésis sont observés. Lorsque la tension s'annule, la polarisation rémanente Pr=7,1 µC/cm² peut être calculée.

On répète cette opération pour différentes grandeurs et orientations du champ électrique appliqué. Les mesures enregistrées constituent ainsi une relation entre l'état magnétique d'un fil et une contrainte magnétique appliquée à ce fil. Le cas échéant, cette relation pourrait être calculée à partir de ces mesures, par des traitements numériques adaptés.

Une fois l'étape de calibration terminée, le capteur est déconnecté de l'ensemble d'excitation de calibration, et on peut mettre en oeuvre une étape de service dans laquelle le capteur est placé sur une surface, ou intégré à un objet pour lequel on veut mesurer le champ de contrainte mécanique appliqué. Cette détermination a été décrite ci-dessus en référence aux figures 1 et 2.

Selon un deuxième mode de réalisation, on n'utilise pas directement le capteur de calibration représenté sur la figure 13 pour effectuer l'opération de service. Au contraire, alors que le capteur, représenté sur la figure 13, comportant une matrice 11 piézoélectrique, du type décrit ci-dessus, est utilisé pour mettre en oeuvre la tâche de calibration, on utilise en parallèle un capteur similaire présentant une matrice mésoporeuse non piézo-électrique. A titre d'exemple purement illustratif de ce deuxième mode de réalisation, représenté sur la figure 7, le capteur comprend une matrice en polycarbonate. Une telle matrice, dans laquelle on a fait croître des nanofils adaptés est représentée sur la figure 7. Cet exemple particulier a été irradié avec une énergie d'entrée de 0.633 MEV/MAU, une énergie de sortie de 0.1 MEV/MAU, une fluence de 10⁸ cm⁻² puis soumise à une attaque asymétrique : 70°C, NaOH 2N pendant 15 minutes, et à une électrodéposition de Ni. Dans ce second mode de réalisation, on utilise la matrice piézoélectrique uniquement pour mettre en oeuvre l'étape de calibration, et on utilise une matrice polymère mésoporeuse classique, par exemple en polycarbonate, pour le capteur lui-même en service, ce qui permet de réduire les coûts de fabrication d'un tel capteur. Pour un tel capteur, on utilise bien entendu la relation établie au cours de l'étape de calibration avec la matrice piézoélectrique.

Dans un tel cas, on pourra facilement avoir recours à un capteur de calibration comprenant un unique fil 12.

Le capteur ainsi réalisé est de taille macroscopique, d'épaisseur micrométrique, et est souple, ce qui permet de l'adapter à tout type de surface.

Un tel capteur pourrait être utile dans les domaines de l'aéronautique, l'aérospatiale, l'hydrodynamique, les écrans tactiles, ....

Il serait ainsi possible de déterminer l'impact de la rugosité des surfaces sur l'écoulement des fluides.

Une autre application d'un tel capteur serait l'étude des contraintes mécaniques locales des éléments de mémoire RAM magnétiques.

## Revendications

1. Dispositif de détection de contraintes mécaniques comprenant :
- un capteur (4) comprenant :
* une matrice (11) présentant une première et une deuxième surface opposées,
* une pluralité de faisceaux (20) de fils (12) magnétostrictifs, chaque fil étant de dimension transversale inférieure à 1 micromètre, et s'étendant chacun à travers la matrice, au moins au niveau de et transversalement à la première surface (11a),
* un ensemble de mesure (13),
- une unité informatique de traitement (5),
**caractérisé en ce que** l'ensemble de mesure est adapté pour détecter un état magnétique de chaque faisceau, et **en ce que** l'unité informatique de traitement (5) comprend :
* une zone mémoire (7) comprenant une relation entre l'état magnétique d'un faisceau et une contrainte mécanique appliquée à ce faisceau, ladite relation ayant été obtenue au cours d'une étape préalable de calibration de fil magnétostrictif,
* un calculateur (6) adapté pour calculer une contrainte mécanique appliquée à chaque faisceau, à partir de l'état magnétique détecté pour ce faisceau, et de ladite relation.

2. Dispositif de détection selon la revendication 1, dans lequel les fils (12) sont magnéto-résistifs, et dans lequel l'ensemble de mesure (13) est adapté pour détecter un état magnétique de chaque faisceau en mesurant une résistivité électrique du faisceau.

3. Dispositif de détection selon la revendication 2, dans lequel les fils (12) s'étendent de la première (11a) à la deuxième surface (11b), et sont électriquement reliés à un générateur (15) de courant électrique et à un voltmètre (14).

4. Dispositif de détection selon l'une des revendications 1 à 3, dans lequel chaque faisceau (20) comprend un unique fil.

5. Dispositif de détection selon l'une des revendications 1 à 3, dans lequel chaque faisceau (20) comprend une pluralité de fils connectés électriquement en parallèle.

6. Dispositif de détection selon l'une des revendications 1 à 5, dans lequel le dispositif comprend :
- un ensemble d'excitation de calibration (21) adapté pour appliquer une contrainte mécanique déterminée variable (19) à la matrice (11), et ainsi aux fils (12),
- un ensemble d'enregistrement (22), adapté pour enregistrer dans la zone mémoire (7) ladite contrainte mécanique déterminée et l'état magnétique détecté associé.

7. Dispositif de détection selon la revendication 6, dans lequel la matrice (11) est piézo-électrique, et dans lequel l'ensemble d'excitation de calibration (21) est adapté pour appliquer à la matrice un champ électrique déterminé variable.

8. Ensemble comprenant un objet (1) et un dispositif de détection selon l'une quelconque des revendications 1 à 7 intégré dans l'objet.

9. Ensemble selon la revendication 8, ou ensemble comprenant un dispositif de détection selon l'une des revendications 1 à 5, l'ensemble comprenant en outre un dispositif de calibration comprenant :
- un capteur de calibration (4) comprenant :
* une matrice de calibration (11) présentant une première et une deuxième surface opposées,
* au moins un fil (12) magnétostrictif de calibration, chaque fil de calibration étant de dimension transversale inférieure à 1 micromètre, et s'étendant chacun à travers la matrice de calibration, au moins au niveau de et transversalement à la première surface,
* un ensemble d'excitation de calibration (21) adapté pour appliquer une contrainte mécanique déterminée variable à la matrice de calibration, et ainsi aux fils de calibration,
* un ensemble de mesure de calibration (13), adapté pour détecter un état magnétique dudit fil de calibration pour ladite contrainte mécanique déterminée,
- une unité informatique de traitement (5) comprenant :
* une zone mémoire (7),
* un ensemble d'enregistrement (22), adapté pour enregistrer dans la zone mémoire une pluralité de contraintes mécaniques déterminées et l'état magnétique détecté associé,
* un calculateur (6) adapté pour déterminer ladite relation à partir desdites contraintes mécaniques déterminées appliquées et des états magnétiques détectés.

10. Procédé de fabrication d'un dispositif de détection de contraintes mécaniques, dans lequel :
(a) on forme un capteur (4) en mettant en oeuvre les étapes suivantes:
(a1) on fournit une matrice (11) mésoporeuse présentant une première et une deuxième surface opposées,
(a2) on forme une pluralité de faisceaux (20) de fils magnétostrictifs, chaque fil étant de dimension transversale inférieure à 1 micromètre, et s'étendant chacun à travers la matrice, au moins au niveau de et transversalement à la première surface,
(a3) on fournit un ensemble de mesure (13), adapté pour détecter un état magnétique de chaque faisceau,
(b) on relie le capteur (4) à une unité informatique de traitement (5) comprenant :
* une zone mémoire (7) comprenant une relation entre l'état magnétique d'un faisceau et une contrainte mécanique appliquée à ce faisceau, ladite relation ayant été obtenue au cours d'une étape préalable de calibration de fil magnétostrictif,
* un calculateur (6) adapté pour calculer une contrainte mécanique appliquée à chaque faisceau, à partir de l'état magnétique détecté pour ce faisceau, et de ladite relation.

11. Procédé de détection de contraintes mécaniques appliquées à la surface d'un objet (1) équipée d'un capteur (4) comprenant :
* une matrice (11) présentant une première et une deuxième surface opposées, lesdites contraintes à mesurer étant appliquées à la première surface,
* une pluralité de faisceaux (20) de fils (12) magnétostrictifs, chaque fil étant de dimension transversale inférieure à 1 micromètre, et s'étendant chacun à travers la matrice, au moins au niveau de et transversalement à la première surface,
* un ensemble de mesure (13), adapté pour détecter un état magnétique de chaque faisceau,
ledit capteur étant reliable à une unité informatique de traitement (5) comprenant :
* une zone mémoire (7) comprenant une relation entre l'état magnétique d'un faisceau et une contrainte mécanique appliquée à ce faisceau, ladite relation ayant été obtenue au cours d'une étape préalable de calibration de fil magnétostrictif,
* un calculateur (6) adapté pour calculer une contrainte mécanique appliquée à chaque faisceau, à partir de l'état magnétique détecté pour ce faisceau, et de ladite relation,
dans lequel :
(a) on génère ladite contrainte mécanique (3),
(b) on mesure un état magnétique d'au moins un faisceau (20),
(c) on calcule la contrainte mécanique appliquée audit faisceau à partir de l'état magnétique détecté pour ce faisceau, et de ladite relation.

12. Dispositif de calibration d'un dispositif de détection de contraintes mécaniques, le dispositif de calibration comprenant :
- un capteur de calibration (4) comprenant :
* une matrice de calibration (11) présentant une première et une deuxième surface opposées,
* au moins un fil (12) magnétostrictif de calibration, chaque fil de calibration étant de dimension transversale inférieure à 1 micromètre, et s'étendant chacun à travers la matrice de calibration, au moins au niveau de et transversalement à la première surface,
* un ensemble d'excitation de calibration (21) adapté pour appliquer une contrainte mécanique déterminée variable à la matrice de calibration, et ainsi aux fils de calibration,
* un ensemble de mesure de calibration (13), adapté pour détecter un état magnétique dudit fil de calibration pour ladite contrainte mécanique déterminée,
- une unité informatique de traitement (5) comprenant :
* une zone mémoire (7),
* un ensemble d'enregistrement (22), adapté pour enregistrer dans la zone mémoire une pluralité de contraintes mécaniques déterminées et l'état magnétique détecté associé,
* un calculateur (6) adapté pour déterminer une relation entre l'état magnétique d'un fil et une contrainte mécanique appliquée à ce fil à partir desdites contraintes mécaniques déterminées appliquées et des états magnétiques détectés.

13. Procédé de calibration d'un dispositif de détection de contraintes mécaniques, dans lequel :
a) on fournit un capteur (4) de calibration comprenant :
* une matrice de calibration (11) présentant une première et une deuxième surface opposées,
* au moins un fil (12) magnétostrictif de calibration, chaque fil de calibration étant de dimension transversale inférieure à 1 micromètre, et s'étendant chacun à travers la matrice de calibration, au moins au niveau de et transversalement à la première surface,
* un ensemble d'excitation de calibration (21) adapté pour appliquer une contrainte mécanique déterminée variable à la matrice de calibration, et ainsi aux fils de calibration,
* un ensemble de mesure de calibration (13), adapté pour détecter un état magnétique dudit fil de calibration pour ladite contrainte mécanique,
b) on fournit une unité informatique de traitement (5) comprenant :
* une zone mémoire (7),
* un ensemble d'enregistrement (22), adapté pour enregistrer dans la zone mémoire une pluralité de contraintes mécaniques déterminées et l'état magnétique détecté associé,
* un calculateur (6) adapté pour déterminer une relation entre l'état magnétique d'un fil et une contrainte mécanique appliquée à ce fil à partir desdites contraintes mécaniques déterminées appliquées et des états magnétiques détectés,
c) on détecte l'état magnétique dudit fil de calibration pour chacun d'une pluralité de contraintes mécaniques appliquées,
d) on détermine ladite relation à partir desdites contraintes mécaniques déterminées appliquées et des états magnétiques détectés.

14. Procédé de fabrication d'un dispositif de calibration d'un dispositif de détection de contraintes mécaniques,
dans lequel :
a) on fabrique un capteur de calibration (4) en mettant en oeuvre les étapes suivantes:
* on fabrique une matrice de calibration (11) présentant une première et une deuxième surface opposées,
* on synthétise au moins un fil (12) magnétostrictif de calibration, chaque fil de calibration étant de dimension transversale inférieure à 1 micromètre, et s'étendant chacun à travers la matrice de calibration, au moins au niveau de et transversalement à la première surface,
* on connecte à la matrice un ensemble d'excitation de calibration (21) adapté pour appliquer une contrainte mécanique déterminée variable à la matrice de calibration, et ainsi aux fils de calibration,
* on connecte un ensemble de mesure (13) de calibration, adapté pour détecter un état magnétique dudit fil de calibration pour ladite contrainte mécanique déterminée,
b) on relie le capteur de calibration (4) à une unité informatique de traitement (5) comprenant :
* une zone mémoire (7),
* un ensemble d'enregistrement (22), adapté pour enregistrer dans la zone mémoire une pluralité de contraintes mécaniques déterminées et l'état magnétique détecté associé,
* un calculateur (6) adapté pour déterminer une relation entre l'état magnétique d'un fil et une contrainte mécanique appliquée à ce fil à partir desdites contraintes mécaniques déterminées appliquées et des états magnétiques détectés.

## Claims

1. Device for detecting mechanical stress, comprising:
- a sensor (4) comprising:
* a matrix (11) having a first and a second opposing surface,
* a plurality of bundles (20) of magneto-strictive wires (12), each wire being of a transverse dimension less than 1 micrometre and each extending through the matrix, at least at and transversely to the first surface (11a),
* a measuring unit (13),
- a computer processing unit (5),
**characterised in that** the measuring unit is configured to detect a magnetic state of each bundle, and **in that** the computer processing unit (5) comprises:
* a memory zone (7) containing a relationship between the magnetic state of a bundle and a mechanical stress applied to this bundle, said relationship having been obtained during a previous step of magneto-strictive wire calibration,
* a calculator (6) configured to calculate a mechanical stress applied to each bundle on the basis of the magnetic state detected for this bundle and of said relationship.

2. Detection device as claimed in claim 1, in which the wires (12) are magneto-resistive, and in which the measuring unit (13) is configured to detect a magnetic state of each bundle by measuring an electric resistivity of the bundle.

3. Detection device as claimed in claim 2, in which the wires (12) extend from the first (11a) to the second surface (11b) and are electrically connected to an electric current generator (15) and to a voltmeter (14).

4. Detection device as claimed in one of claims 1 to 3, in which each bundle (20) comprises a single wire.

5. Detection device as claimed in one of claims 1 to 3, in which each bundle (20) comprises a plurality of wires electrically connected in parallel.

6. Detection device as claimed in one of claims 1 to 5, in which the device comprises:
- a calibration excitation unit (21) configured to apply a given variable (19) mechanical stress to the matrix (11), and thus to the wires (12),
- a recording unit (22) configured to record said given mechanical stress and the associated detected magnetic state in the memory zone (7).

7. Detection device as claimed in claim 6, in which the matrix (11) is piezo-electric, and in which the calibration excitation unit (21) is configured to apply a given variable electric field to the matrix.

8. Assembly comprising an object (1) and a detection device as claimed in any one of claims 1 to 7 integrated in the object.

9. Assembly ass claimed in claim 8, or an assembly comprising a detection device as claimed in one of claims 1 to 5, the assembly further comprising a calibration device comprising:
- a calibration sensor (4) comprising:
* a calibration matrix (11) having a first and a second opposing surface,
* at least one magneto-strictive calibration wire (12), each calibration wire being of a transverse dimension less than 1 micrometre and each extending through the calibration matrix, at least at and transversely to the first surface,
* a calibration excitation unit (21) configured to apply a given variable mechanical stress to the calibration matrix and thus to the calibration wires,
* a calibration measuring unit (13) configured to detect a magnetic state of said calibration wire for said given mechanical stress,
- a computer processing unit (5) comprising:
* a memory zone (7),
* a recording unit (22) configured to record a plurality of given mechanical stresses and the associated detected magnetic state in the memory zone,
* a calculator (6) configured to determine said relationship on the basis of said given mechanical stresses applied and of the magnetic states detected.

10. Method of manufacturing a device for detecting mechanical stresses, in which:
(a) a sensor (4) is formed by implementing the following steps:
(a1) a mesoporous matrix (11) with a first and a second opposing surface is provided,
(a2) a plurality of bundles (20) of magneto strictive wires is formed, each wire being of a transverse dimension less than 1 micrometre and each extending through the matrix, at least at and transversely to the first surface,
(a3) a measuring unit (13) is provided, configured to detect a magnetic state of each bundle,
(b) the sensor (4) is connected to a computer processing unit (5) comprising:
* a memory zone (7) containing a relationship between the magnetic state of a bundle and a mechanical stress applied to this bundle, said relationship having been obtained during a previous step of magneto-strictive wire calibration,
* a calculator (6) configured to calculate a mechanical stress applied to each bundle on the basis of the magnetic state detected for this bundle and of said relationship.

11. Method of detecting mechanical stresses applied to the surface of an object (1) equipped with a sensor (4) comprising:
* a matrix (11) having a first and second opposing surface, said stresses to be measured being applied to the first surface,
* a plurality of bundles (20) of magneto-strictive wires (12), each wire being of a transverse dimension less than 1 micrometre and each extending through the matrix, at least at and transversely to the first surface,
* a measuring unit (13) configured to detect a magnetic state of each bundle,
said sensor being connectable to a computer processing unit (5) comprising:
* a memory zone (7) containing a relationship between the magnetic state of a bundle and a mechanical stress applied to this bundle, said relationship having been obtained during a previous step of magneto-strictive wire calibration,
* a calculator (6) configured to calculate a mechanical stress applied to each bundle on the basis of the magnetic state detected for this bundle and of said relationship,
in which:
(a) said mechanical stress (3) is generated,
(b) a magnetic state of at least one bundle (20) is measured,
(c) the mechanical stress applied to said bundle is calculated on the basis of the magnetic state detected for this bundle and from said relationship.

12. Device for calibrating a device for detecting mechanical stress, which calibration device comprises:
- a calibration sensor (4) comprising:
* a calibration matrix (11) having a first and a second opposing surface,
* at least one magneto-strictive calibration wire (12), each calibration wire being of a dimension less than 1 micrometre and each extending through the calibration matrix, at least at and transversely to the first surface,
* a calibration excitation unit (21) configured to apply a given variable mechanical stress to the calibration matrix and thus to the calibration wires,
* a calibration measuring unit (13) configured to detect a magnetic state of said calibration wire for said given mechanical stress,
- a computer processing unit (5) comprising:
* a memory zone (7),
* a recording unit (22) configured to record a plurality of given mechanical stresses and the associated detected magnetic state in the memory zone,
* a calculator (6) configured to determine a relationship between the magnetic state of a wire and a mechanical stress applied to this wire on the basis of said given mechanical stresses applied and of the magnetic states detected.

13. Method of calibrating a device for detecting mechanical stress, in which:
a) a calibration sensor (4) is provided, comprising:
* a calibration matrix (11) having a first and a second opposing surface,
* at least one magneto-strictive calibration wire (12), each calibration wire being of a dimension less than 1 micrometre and each extending through the calibration matrix, at least at and transversely to the first surface,
* a calibration excitation unit (21) configured to apply a given variable mechanical stress to the calibration matrix and thus to the calibration wires,
* a calibration measuring unit (13) configured to detect a magnetic state of said calibration wire for said mechanical stress,
b) a computer processing unit (5) is provided, comprising:
* a memory zone (7),
* a recording unit (22) configured to record a plurality of given mechanical stresses and the associated detected magnetic state in the memory zone,
* a calculator (6) configured to determine a relationship between the magnetic state of a wire and a mechanical stress applied to this wire on the basis of said given mechanical stresses applied and of the magnetic states detected,
c) the magnetic state of said calibration wire is detected for each one of a plurality of mechanical stresses applied,
d) said relationship is determined on the basis of said given mechanical stresses applied and from the magnetic states detected.

14. Method of manufacturing a device for calibrating a device for detecting mechanical stress,
in which:
a) a calibration sensor (4) is manufactured by implementing the following steps:
* a calibration matrix (11) having a first and a second opposing surface is manufactured,
* at least one magneto-strictive calibration wire (12) is synthesised, each calibration wire being of a transverse dimension less than 1 micrometre and each extending through the calibration matrix, at least at and transversely to the first surface,
* the matrix is connected to a calibration excitation unit (21) configured to apply a given variable mechanical stress to the calibration matrix and thus to the calibration wires,
* a calibration measuring unit (13) configured to detect a magnetic state of said calibration wire for said given mechanical stress is connected,
b) the calibration sensor (4) is connected to a computer processing unit (5) comprising:
* a memory zone (7),
* a recording unit (22) configured to record a plurality of given mechanical stresses and the associated detected magnetic state in the memory zone,
* a calculator (6) configured to determine a relationship between the magnetic state of a wire and a mechanical stress applied to this wire on the basis of said given mechanical stresses applied and of magnetic states detected.

## Patentansprüche

1. Vorrichtung zur Detecktion von mechanischen Spannungen, mit:
- einem Sensor (4) mit:
* einer Matrix (11) mit einer ersten Oberfläche und einer zweiten Oberfläche, die sich gegenüberliegen,
* mehreren Bündeln (20) magnetostriktiver Drähte (12), wobei jeder Draht eine transversale Abmessung von weniger als 1 Mikrometer hat und sich durch die Matrix erstreckt, zumindest im Bereich der und transversal zur ersten Oberfläche (11a),
* einer Messanordnung (13),
- einer Datenverarbeitungseinheit (5),
**dadurch gekennzeichnet, dass** die Messanordnung einen magnetischen Zustand jedes Bündels detektieren kann, und dadurch, dass die Datenverarbeitungseinheit (5) aufweist:
* einen Speicherbereich (7), der eine Beziehung zwischen dem magnetischen Zustand eines Bündels und einer an diesem Bündel anliegenden mechanischen Spannung aufweist, wobei diese Beziehung während eines vorangehenden Schritts einer Kalibrierung des magnetostriktiven Drahts gewonnen worden ist,
* einen Rechner (6) zum Berechnen einer an jedem Bündel anliegenden mechanischen Spannung ausgehend von dem für dieses Bündel detektierten magnetischen Zustand und der Beziehung.

2. Detektionsvorrichtung nach Anspruch 1, in welcher die Drähte (12) magnetoresistiv sind und in welcher die Messanordnung (13) durch Messen einer elektrischen Resistivität des Bündels einen magnetischen Zustand detektieren kann.

3. Detektionsvorrichtung nach Anspruch 2, in welcher sich die Drähte (12) von der ersten (11a) zur zweiten Oberfläche (11b) erstrecken und elektrisch mit einem elektrischen Stromerzeuger (15) und einem Voltmeter (14) verbunden sind.

4. Detektionsvorrichtung nach einem der Ansprüche 1 bis 3, in welcher jedes Bündel (20) einen einzigen Draht aufweist.

5. Detektionsvorrichtung nach einem der Ansprüche 1 bis 3, in welcher jedes Bündel (20) mehrere Drähte aufweist, die elektrisch parallel miteinander verbunden sind.

6. Detektionsvorrichtung nach einem der Ansprüche 1 bis 5, in welcher die Vorrichtung aufweist:
- eine Kalibrationsansteuerungsanordnung (21) zum Anlegen einer vorgegebenen variablen mechanischen Spannung (19) an die Matrix (11) und folglich an die Drähte (12),
- eine Aufzeichnungsanordnung (22) zum Aufzeichnen der vorgegebenen mechanischen Spannung und des dazugehörigen detektierten magnetischen Zustands in dem Speicherbereich (7).

7. Detektionsvorrichtung nach Anspruch 6, in welcher die Matrix (11) piezoelektrisch ist und in welcher die Kalibrationsansteuerungsanordnung (21) ein vorgegebenes variables elektrisches Feld an die Matrix anlegen kann.

8. Anordnung mit einem Objekt (1) und einer in das Objekt integrierten Detektionsvorrichtung nach einem der Ansprüche 1 bis 7.

9. Anordnung nach Anspruch 8 oder Anordnung mit einer Detektionsvorrichtung nach einem der Ansprüche 1 bis 5, wobei die Anordnung außerdem eine Kalibrationsvorrichtung aufweist, mit
- einem Kalibrationssensor (4) mit:
* einer Kalibrationsmatrix (11) mit einer ersten und einer zweiten Oberfläche, die sich gegenüberliegen,
* mindestens einem magnetostriktiven Kalibrationsdraht (12), wobei jeder Kalibrationsdraht eine transversale Abmessung von weniger als 1 Mikrometer hat und sich durch die Kalibrationsmatrix erstreckt, zumindest im Bereich der und transversal zur ersten Oberfläche,
* einer Kalibrationsansteuerungsanordnung (21) zum Anlegen einer vorgegebenen variablen mechanischen Spannung an die Kalibrationsmatrix und folglich an die Kalibrationsdrähte,
* einer Kalibrationsmessanordnung (13) zur Detektion eines magnetischen Zustands des Kalibrationsdrahts für die vorgegebene mechanische Spannung,
- einer Datenverarbeitungseinheit (5) mit
* einem Speicherbereich (7),
* einer Aufzeichnungsanordnung (22) zum Aufzeichnen von mehreren vorgegebenen mechanischen Spannungen und des jeweils dazugehörigen detektierten magnetischen Zustands in dem Speicherbereich,
* einem Rechner (6) zum Ermitteln der Beziehung ausgehend von den vorgegebenen angelegten mechanischen Spannungen und den detektierten magnetischen Zuständen.

10. Verfahren zur Herstellung einer zur Detektion von mechanischen Spannungen vorgesehenen Detektionsvorrichtung mit:
(a) Herstellung eines Sensors (4) durch Ausführen der folgenden Schritte:
(a1) Bereitstellen einer mesoporösen Matrix (11), die eine erste und eine zweite Oberfläche aufweist, die sich gegenüberliegen,
(a2) Herstellung von mehreren Bündeln (20) magnetostriktiver Drähte, wobei jeder Draht eine transversale Abmessung von weniger als 1 Mikrometer hat und sich durch die Matrix erstreckt, zumindest im Bereich der und transversal zur ersten Oberfläche,
(a3) Bereitstellen einer Messanordnung (13) zur Detektion eines magnetischen Zustands jedes Bündels,
(b) Verbinden des Sensors (4) mit einer Datenverarbeitungseinheit (5), die aufweist:
* einen Speicherbereich (7), der eine Beziehung zwischen dem magnetischen Zustand eines Bündels und einer an diesem Bündel anliegenden mechanischen Spannung aufweist, wobei die Beziehung während eines vorangehenden Schritts einer Kalibrierung des magnetostriktiven Drahts gewonnen worden ist,
* einen Rechner (6) zum Berechnen einer an jedem Bündel anliegenden mechanischen Spannung ausgehend von dem für dieses Bündel detektierten magnetischen Zustand und der Beziehung.

11. Verfahren zum Detektieren von mechanischen Spannung, die an der mit einem Sensor (4) ausgestatteten Oberfläche eines Objekts (1) anliegen, wobei der Sensor (4) aufweist:
* eine Matrix (11) mit einer ersten und einer zweiten Oberfläche, die sich gegenüberliegen, wobei die zu messenden Spannungen an der ersten Oberfläche anliegen,
* mehrere Bündel (20) magnetostriktiver Drähte (12), wobei jeder Draht eine transversale Abmessung von weniger als 1 Mikrometer hat und sich durch die Matrix erstreckt, zumindest im Bereich der und transversal zur ersten Oberfläche,
* eine Messanordnung (13) zur Detektion eines magnetischen Zustands jedes Bündels,
wobei der Sensor mit einer Datenverarbeitungseinheit (5) verbindbar ist, die aufweist:
* einen Speicherbereich (7), der eine Beziehung zwischen dem magnetischen Zustand eines Bündels und einer an diesem Bündel anliegenden mechanischen Spannung aufweist, wobei die Beziehung während eines vorangehenden Schritts einer Kalibrierung des magnetostriktiven Drahts gewonnen worden ist,
* einen Rechner (6) zum Berechnen einer an jedem Bündel anliegenden mechanischen Spannung ausgehend von dem für dieses Bündel detektierten magnetischen Zustand und der Beziehung,
mit den folgenden Verfahrensschritten:
(a) Erzeugen der mechanischen Spannung (3),
(b) Messen des magnetischen Zustands mindestens eines Bündels (20),
(c) Berechnen der an dem Bündel anliegenden mechanischen Spannung ausgehend von dem für dieses Bündel detektierten magnetischen Zustand und der Beziehung.

12. Kalibrationsvorrichtung zum Kalibrieren einer für die Detektion von mechanischen Spannung vorgesehenen Detektionsvorrichtung, wobei die Kalibrationsvorrichtung aufweist:
- einen Kalibrationssensor (4) mit:
* einer Kalibrationsmatrix (11) mit einer ersten und einer zweiten Oberfläche, die sich gegenüberliegen,
* mindestens einem magnetostriktiven Kalibrationsdraht (12), wobei jeder Kalibrationsdraht eine transversale Abmessung von weniger als 1 Mikrometer hat und sich durch die Kalibrationsmatrix erstreckt, zumindest im Bereich der und transversal zur ersten Oberfläche,
* einer Kalibrationsansteuerungsanordnung (21) zum Anlegen einer vorgegebenen variablen mechanischen Spannung an die Kalibrationsmatrix und folglich an die Kalibrationsdrähte,
* einer Kalibrationsmessanordnung (13) zur Detektion eines magnetischen Zustands des Kalibrationsdrahts für die vorgegebene mechanische Spannung,
- eine Datenverarbeitungseinheit (5) mit
* einem Speicherbereich (7),
* einer Aufzeichnungsanordnung (22) zum Aufzeichnen von mehreren vorgegebenen mechanischen Spannungen und des jeweils dazugehörigen detektierten magnetischen Zustands in dem Speicherbereich,
* einem Rechner (6) zum Ermitteln einer Beziehung zwischen dem magnetischen Zustand eines Drahts und einer an diesem Draht anliegenden mechanischen Spannung ausgehend von den vorgegebenen angelegten mechanischen Spannungen und den detektierten magnetischen Zuständen.

13. Verfahren zum Kalibrieren einer für die Detektion von mechanischen Spannung en vorgesehenen Detektionsvorrichtung mit:
a) Bereitstellen eines Kalibrationssensors (4), der aufweist:
* eine Kalibrationsmatrix (11) mit einer ersten und einer zweiten Oberfläche, die sich gegenüberliegen,
* mindestens einen magnetostriktiven Kalibrationsdraht (12), wobei jeder Kalibrationsdraht eine transversale Abmessung von weniger als 1 Mikrometer hat und sich durch die Kalibrationsmatrix erstreckt, zumindest im Bereich der und transversal zur ersten Oberfläche,
* eine Kalibrationsansteuerungsanordnung (21) zum Anlegen einer vorgegebenen variablen mechanischen Spannung an die Kalibrationsmatrix und folglich an die Kalibrationsdrähte,
* eine Kalibrationsmessanordnung (13) zur Detektion eines magnetischen Zustands des Kalibrationsdrahts für die mechanische Spannung,
b) Bereitstellen einer Datenverarbeitungseinheit (5), die aufweist:
* einen Speicherbereich (7),
* eine Aufzeichnungsanordnung (22) zum Aufzeichnen von mehreren vorgegebenen mechanischen Spannungen und des jeweils dazugehörigen detektierten magnetischen Zustands in dem Speicherbereich,
* einen Rechner (6) zum Ermitteln einer Beziehung zwischen dem magnetischen Zustand eines Drahts und einer an diesem Draht anliegenden mechanischen Spannung ausgehend von den vorgegebenen angelegten mechanischen Spannungen und den detektierten magnetischen Zuständen,
c) Detektieren des magnetischen Zustands des Kalibrationsdrahts für jede von mehreren angelegten mechanischen Spannungen,
d) Ermitteln der Beziehung ausgehend von den vorgegebenen angelegten mechanischen Spannungen und den detektierten magnetischen Zuständen.

14. Verfahren zur Herstellung einer Vorrichtung zum Kalibrieren einer für die Detektion von mechanischen Spannungen vorgesehenen Detektionsvorrichtung mit:
a) Herstellen eines Kalibrationssensors (4) durch Ausführen der folgenden Schritte:
* Herstellen einer Kalibrationsmatrix (11), die eine erste und eine zweite Oberfläche aufweist, die sich gegenüberliegen,
* Synthetisieren mindestens eines magnetostriktiven Kalibrationsdrahts (12), wobei jeder Kalibrationsdraht eine transversale Abmessung von weniger als 1 Mikrometer hat und sich durch die Kalibrationsmatrix erstreckt, zumindest im Bereich der und transversal zur ersten Oberfläche,
* Verbinden der Matrix mit einer Kalibrationsansteuerungsanordnung (21) zum Anlegen einer vorgegebenen variablen mechanischen Spannung an die Kalibrationsmatrix und folglich an die Kalibrationsdrähte,
* Anschließen einer Kalibrationsmessanordnung (13) zur Detektion eines magnetischen Zustands des Kalibrationsdrahts für die vorgegebene mechanische Spannung,
b) Verbinden des Kalibrationssensors (4) mit einer Datenverarbeitungseinheit (5), die aufweist:
* einen Speicherbereich (7),
* eine Aufzeichnungsanordnung (22) zum Aufzeichnen von mehreren vorgegebenen mechanischen Spannungen und des jeweils dazugehörigen detektierten magnetischen Zustands in dem Speicherbereich,
* einen Rechner (6) zum Ermitteln einer Beziehung zwischen dem magnetischen Zustand eines Drahts und einer an diesem Draht anliegenden mechanischen Spannung ausgehend von den vorgegebenen angelegten mechanischen Spannungen und den detektierten magnetischen Zuständen.
